(19) Europäisches Patentamt
European Patent Office
Office européen des brevets

(11) Numéro de publication: **0 024 063**
**B1**

# (12) FASCICULE DE BREVET EUROPEEN

(45) Date de publication du fascicule du brevet: **29.12.82**

(51) Int. Cl.$^3$: **C 22 B 3/00**, C 01 G 49/00

(21) Numéro de dépôt: **80200746.8**

(22) Date de dépôt: **06.08.80**

## (54) Procédé pour séparer du fer trivalent d'une solution aqueuse de chlorures.

(30) Priorité: **13.08.79 LU 81601**

(43) Date de publication de la demande:
**18.02.81 Bulletin 81/7**

(45) Mention de la délivrance du brevet:
**29.12.82 Bulletin 82/52**

(84) Etats contractants désignés:
**DE FR GB IT**

(56) Documents cités:
**FR - A - 2 249 838**
**FR - A - 2 351 055**
**US - A - 3 832 165**
**US - A - 3 875 285**

**CHEMICAL ABSTRACTS, vol. 83, no. 24, 15 décembre 1975, réf. 198425x page 341, Columbus, Ohio, US V. A. KOZLOV et al.: "Extraction of vanadium (V) from hydrochloric acid solutions by tributyl phosphate in a mixture with the higher primary isoalcohols of the C12-C16 fraction"**

(73) Titulaire: **METALLURGIE HOBOKEN-OVERPELT Société anonyme dite: 8, rue Montagne du Parc B-1000 Bruxelles (BE)**

(72) Inventeur: **De Schepper, Achille Berkenlaan 8 B-2451 Lichtaart (BE)**
Inventeur: **Coussement, Marc Magdalena Vermeerschlaan 18 B-2540 Hove (BE)**

(74) Mandataire: **Saelemaekers, Juul et al, METALLURGIE HOBOKEN-OVERPELT A. Greinerstraat 14 B-2710 Hoboken (BE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 024 063 B1

# Procédé pour séparer du fer trivalent d'une solution aqueuse de chlorures

La présente invention est relative à un procédé pour séparer du fer trivalent d'une solution aqueuse acide de chlorures, dans lequel on met la solution aqueuse en contact avec un phase organique contenant en tant qu'agent d'extraction pour le fer trivalent, un composé organophosphorique choisi parmi

— les esters de l'acide phosphorique de formule

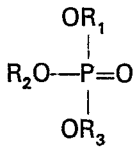 (I),

— les esters de l'acide phosphonique de formule

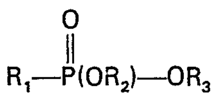 (II)

— les esters de l'acide phosphoneux de formule

$R_1—P(OR_2)—OR_3$ (III),

— les esters de l'acide phosphinique de formule

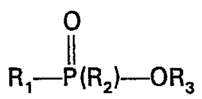 (IV), et

— les esters de l'acide phosphineux de formule

$R_1—P(R_2)—OR_3$ (V)

dans lesquelles $R_1$, $R_2$ et $R_3$ représentent chacun un groupe d'hydrocarbure substitué ou non substitué, égal ou différent, et
en tant qu'agent empêchant la formation d'émulsion, un alcool aliphatique contenant de 8 à 16 atomes de carbone,
on sépare la phase organique chargée de fer de la solution aqueuse, et on ré-extrait le fer de la phase organique chargée de fer en mettant cette phase organique en contact avec de l'eau ou de l'eau acidulée de façon à obtenir une solution aqueuse de chlorure de fer.

Un tel procédé est décrit dans le document US—A—3 832 165. Ce procédé connu concerne l'extraction sélective du fer trivalent d'une solution aqueuse de chlorures contenant du manganèse et obtenue lors de la lixiviation à l'acide chlorhydrique de nodules sous-marins manganifères, cette solution pouvant contenir, en outre, du nickel, du cuivre, du cobalt, du plomb et du zinc. On y fait usage d'une phase organique, qui contient un composé de formule (I) en tant qu'agent d'extraction pour le fer et qui peut contenir un alcool aliphatique ayant 8 à 16 atomes de carbone en tant qu'agent empêchant la formation d'une émulsion. Le cas échéant, on n'y utilise pas plus d'alcool aliphatique que la quantité nécessaire pour empêcher la formation d'une émulsion: généralement pas plus qu'environ 25% en volume de la phase organique et préférentiellement d'environ 2 à environ 20% en volume, la teneur la plus préférée étant égale ou inférieure à environ 15% en volume.

Ce procédé connu présente l'inconvénient de requérir pour la ré-extraction du fer de la phase organique, une quantité relativement élevée de ré-extractant (eau ou eau acidulée), ce qui influence défavorablement les coûts d'installation et d'exploitation afférents à la ré-extraction. Il en résulte également que l'on obtient finalement une solution aqueuse de chlorure de fer relativement diluée, ce qui influence défavorablement les coûts d'installation et d'exploitation afférents au traitement ultérieur, par exemple par pyrohydrolyse, de cette solution aqueuse.

Le procédé selon la présente invention évite l'inconvénient ci-dessus.

Suivant l'invention on utilise une phase organique contenant au moins 40% en volume de l'alcool aliphatique.

En effet, il a été trouvé par la demanderesse que l'alcool aliphatique n'agit pas seulement en tant qu'agent empêchant la formation d'une émulsion, mais également en tant qu'agent d'extraction pour le fer trivalent, qui se distingue du composé organophosphorique en ce qu'il se laisse libérer de sa charge de fer avec une quantité de ré-extractant notablement plus faible.

Le procédé de la présente invention permet d'exploiter à fond cette propriété particulièrement intéressante de l'alcool aliphatique à longue chaîne.

On utilise, de préférence, une phase organique ne contenant pas plus que 55% en volume d'alcool aliphatique, parce qu'il a été trouvé qu'à une teneur supérieure à 55% la viscosité de la phase organique devient assez élevée et la perte en alcool assez importante.

Il est également avantageux d'utiliser une phase organique contenant au moins 10% en volume du composé organophosphorique, car, si elle contient moins de 10% du composé organophosphorique, sa capacité d'extraction est faible.

La phase organique peut contenir de 0 à 50% en volume d'un diluant inerte, avantageusement un diluant à caractère aliphatique tel le kérosène.

En tant qu'alcool aliphatique contenant 8 à 16 atomes de carbone, on peut utiliser l'isodécanol, auquel on donne la préférence, et

les alcools mentionnés à la colonne 6, lignes 23—27 du document US—A—3 832 165 susdit.

En tant que composé de formule (I), on utilise avantageusement les esters de l'acide phosphorique décrits et mentionnés à la colonne 4, lignes 17—38, du document US—A—3 832 165 susdit.

Et tant que composé de formule (II), on utilise avantageusement les esters de l'acide phosphonique décrits et mentionnés dans les documents DE—A—2 232 460 et GB—A—1 428 278.

En tant que composé de formule (IV), on utilise avantageusement les esters de l'acide phosphinique décrits et mentionnés dans le document DE—A—2 315 849 et le document GB—A—1 428 278 susdit.

La teneur en ions $Cl^-$ de la solution aqueuse de départ est, de préférence, égal ou supérieure à 105 g/l, sinon le coefficient de répartition du fer entre la phase organique et la phase aqueuse est trop faible.

La teneur en HCl de la solution aqueuse de départ est, de préférence, égale ou supérieure à 18 g/l, sinon la co-extraction avec le fer d'autres éléments tels le zinc, par exemple, devient assez importante.

L'acidité du ré-extractant (eau ou eau acidulée) est avantageusement juste suffisante pour empêcher l'hydrolyse du chlorure de fer. Le plus souvent, on peut utiliser un ré-extractant dont le pH est compris entre 0,8 et 7. En tant qu'eau acidulée, on utilise de préférence de l'eau contenant du HCl.

Il peut être utile de faire précéder la ré-extraction par un lavage de la phase organique avec une faible quantité d'eau, ce qui permet d'obtenir, lors de la ré-extraction, un éluat plus pur et moins acide. Cette quantité d'eau doit être suffisamment faible pour que l'eau de lavage obtenue contienne au moins 105 g/l d'ions $Cl^-$ et au moins 18 g/l de HCl.

Si la solution aqueuse de départ contient au moins un des éléments Zn, Cu, Mn, Co et Ni, le fer est séparé des dits éléments dans le procédé de la présente invention.

Si la solution aqueuse de départ contient, en outre, du molybdène hexavalent et/ou du vanadium pentavalent, ceux-ci sont séparés ensemble avec le fer, des dits éléments, dans le procédé de la présente invention.

Le procédé de la présente invention est particulièrement utile pour traiter des solutions aqueuses de chlorures contenant au moins 10 g/l de fer trivalent.

Pour traiter des solutions aqueuses de chlorures contenant moins de 10 g/l de fer trivalent, le procédé de l'art antérieur mentionné plus haut et utilisant une phase organique contenant juste assez d'alcool aliphatique à longue chaîne pour empêcher la formation d'une émulsion, convient également. En effet, l'extraction du fer de ces dernières solutions peut être effectuée avec une phase organique ayant une faible teneur en composé organophosphorique, par exemple 10% en volume de phosphate de tributyle. Or, il a été trouvé que la tendance de la phase organique ferrifère de retenir son fer lorsque mise en contact avec un ré-extractant aqueux, diminue lorsque la teneur en composé organophosphorique de la phase organique diminue.

Les exemples suivant feront mieux comprendre le procédé de l'invention et ses avantages.

## Exemple 1

Cet exemple concerne la séparation du fer trivalent d'une solution aqueuse de chlorures par un procédé de l'art antérieur, c'est-à-dire en utilisant une phase organique contenant juste assez d'alcool aliphatique pour empêcher la formation d'une émulsion lors de l'extraction.

La solution de départ contient en g/l: 24 $Fe^{3+}$, 0,6 Zn, 4,5 Cu, 110 mn, 0,8 Co, 4,9 Ni, 20 HCl.

On utilise une phase organique constituée de 40% en volume de phosphate de tributyle (PTB), de 20% en volume d'isodécanol et de 40% en volume de kérosène.

On effectue l'extraction en contrecourant, en 5 étages et avec un rapport volumétrique entre la phase organique et la phase aqueuse égal à 1,2.

On obtient une phase organique chargée de fer et un raffinat contenant en g/l : 0,1 $Fe^{3+}$, 0,63 Zn, 4,73 Cu, 115,2 Mn, 0,84 Co, 5,15 Ni, 4 HCl.

On ré-extrait le fer de la phase organique avec de l'eau, en contrecourant, en 6 étages et avec un rapport volumétrique entre la phase organique et la phase aqueuse égal à 2,5.

On obtient ainsi une phase organique régénérée et un éluat contenant en g/l : 59,17 $Fe^{3+}$, 0,004 Zn, 0,002 Cu, 1,47 Mn, 0,002 Co, 0,001 Ni, 35,41 HCl. La phase organique régénérée contient en g/l : 0,23 $Fe^{3+}$, 0,002 Mn et 1,34 HCl.

## Exemple 2

Cet exemple concerne la séparation du fer trivalent d'une solution aqueuse de chlorures par le procédé de l'invention.

La solution de départ est identique à celle utilisée dans l'exemple 1.

On utilise une phase organique constituée de 20% en volume de PTB, de 50% en volume d'isodécanol et de 30% en volume de kérosène.

On effectue l'extraction en contrecourant, en 5 étages et avec un rapport volumétrique entre la phase organique et la phase aqueuse égal à 1,35.

On obtient une phase organique chargée de fer et un raffinat contenant en g/l : 0,15 $Fe^{3+}$, 0,63 Zn, 4,75 Cu, 115,2 Mn, 0,85 Co, 5,15 Ni, 6,5 HCl.

On ré-extrait le fer de la phase organique avec de l'eau, en contrecourant, en 5 étages et avec un rapport volumétrique entre la phase organique et la phase aqueuse égal à 6.

On obtient ainsi une phase organique régénérée et un éluat contenant en g/l : 105,9 $Fe^{3+}$, 0,003 Zn, 0,002 Cu, 2,22 Mn, 0,001 Co, 0,001 Ni, 58,47 HCl. La phase organique régénérée contient en g/l : 0,20 $Fe^{3+}$, 0,001 Mn, 1,87 HCl.

Lorsqu'on compare les données des exemples 1 et 2, on voit que l'on a obtenu dans les deux cas pratiquement les mêmes rendements d'extraction (voir teneur en Fe des raffinats) et pratiquement les mêmes rendements de ré-extraction (voir teneur en Fe des phases organiques régénérées).

A cet effet, on a dû utiliser dans le second cas seulement 12% plus de phase organique que dans le premier cas, pour l'extraction, quoique la teneur en PTB de la phase organique utilisée dans le second cas n'était que 50% de celle de la phase organique utilisée dans le premier cas, ce qui prouve que l'isodécanol agit en tant qu'extractant.

Par contre, on a pu utiliser dans le second cas 53% moins d'eau que dans le premier cas pour la ré-extraction, que l'on a réalisée, en outre, avec un étage de moins dans le second cas, ce qui prouve que l'isodécanol se laisse beaucoup plus facilement libérer de sa charge de fer que le PTB.

Exemple 3

Une phase organique chargée de fer, identique à celle obtenue dans l'exemple 2, est lavée avec de l'eau, en un étage et avec un rapport volumétrique entre la phase organique et la phase aqueuse égal à 30. On obtient ainsi une phase organique lavée et une eau de lavage contenant en g/l : 73 $Fe^{3+}$, 17,2 Mn et 110 HCl.

On ré-extrait le fer de la phase organique lavée, avec de l'eau en contrecourant, en 5 étages et avec un rapport volumétrique entre la phase organique et la phase aqueuse égal à 6.

On obtient ainsi une phase organique régénérée et un éluat contenant en g/l : 88,02 $Fe^{3+}$, 0,002 Zn, 0,001 Cu, 0,001 Co, 0,001 Ni, 0,43 Mn, et 37 HCl.

Lorsqu'on compare les données des exemples 2 et 3, on voit que l'on peut substantiellement réduire les teneurs en HCl et en manganèse de l'éluat, en lavant la phase organique chargée, avec une faible quantité d'eau avant d'effectuer la ré-extraction proprement dite.

Exemple 4

Cet exemple concerne la séparation du fer trivalent et du molybdène hexavalent d'une solution aqueuse de chlorures par le procédé de l'invention.

La solution de départ contient en g/l : 26,88 $Fe^{3+}$, 0,201 $Mo^{6+}$, 0,173 $V^{4+}$, 121,1 Mn, 22,3 HCl.

La phase organique est identique à celle utilisée dans l'exemple 2.

On effectue l'extraction à contrecourant, en 6 étages, avec un rapport volumétrique entre la phase organique et la phase aqueuse égal à 1,35.

On obtient une phase organique chargée de fer et de molybdène et un raffinat contenant en g/l : 0,047 $Fe^{3+}$, 0,004 $Mo^{6+}$, 0,154 $V^{4+}$, 119,8 Mn, 4,42 HCl.

On lave la phase organique chargée de fer et de molybdène avec de l'eau, en un étage et avec un rapport volumétrique entre la phase organique et la phase aqueuse égal à 30.

On obtient ainsi une phase organique lavée et une eau de lavage contenant en g/l : 84,04 $Fe^{3+}$, 0,450 $Mo^{6+}$, 0,264 $V^{4+}$, 20,16 Mn, 108,6 HCl. La phase organique lavée contient en g/l : 17,07 $Fe^{3+}$, 0,131 $Mo^{6+}$, 0,005 $V^{4+}$, 0,29 Mn, 9,62 HCl.

On ré-extrait le fer de la phase organique lavée, en traitant celle-ci avec de l'eau en contrecourant, en 6 étages et avec un rapport volumétrique entre la phase organique et la phase aqueuse égal à 5.

On obtient ainsi une phase organique déferrée et un éluat contenant en g/l : 84,3 $Fe^{3+}$, 0,405 $Mo^{6+}$, 0,020 $V^{4+}$, 1,44 Mn, 38,87 HCl.

La phase organique déferrée contient en g/l : 0,21 $Fe^{3+}$, 0,05 $Mo^{6+}$, 0,001 $V^{4+}$, 0,001 Mn, 1,85 HCl.

Le rendement de ré-extraction du fer est de 99,8% ce qui est largement suffisant. Cependant, le rendement de ré-extraction du molybdène n'est que de 62%, ce qui pourrait créer des problèmes lors du recyclage de la phase organique.

**Revendications**

1. Procédé pour séparer du fer trivalent d'une solution aqueuse acide de chlorures, dans lequel on met la solution aqueuse en contact avec une phase organique contenant

en tant qu'agent d'extraction pour le fer trivalent, un composé organophosphorique choisi parmi

— les esters de l'acide phosphorique de formule

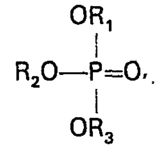

— les esters de l'acide phosphonique de formule

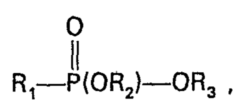

— les esters de l'acide phosphoneux de formule

$R_1—P(OR_2)—OR_3$,

— les esters de l'acide phosphinique de formule

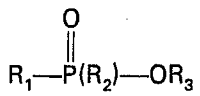

, et .

— les esters de l'acide phosphineux de formule

$R_1—P(R_2)—OR_3$ , .

dans lesquelles $R_1$, $R_2$ et $R_3$ représentent chacun un groupe d'hydrocarbure substitué ou non substitué, égal ou différent, et

en tant qu'agent empêchant la formation d'émulsion, un alcool aliphatique contenant de 8 à 16 atomes de carbone,

on sépare la phase organique chargée de fer de la solution aqueuse, et on ré-extrait le fer de la phase organique chargée de fer en mettant cette phase organique en contact avec de l'eau ou de l'eau acidulée de façon à obtenir une solution aqueuse de chlorure de fer, caractérisé en ce qu'on utilise une phase organique contenant au moins 40% en volume de l'alcool aliphatique.

2. Procédé selon la revendication 1, caractérisé en ce qu'on utilise une phase organique contenant de 40 à 55% de l'alcool aliphatique, de 10 à 60% du composé organophosphorique et de 0 à 50% d'un diluant inerte.

3. Procédé selon la revendication 1 ou 2, caractérisé en ce qu'on utilise de l'isodécanol comme alcool aliphatique.

4. Procédé selon la revendication 1, 2 ou 3, caractérisé en ce qu'on utilise du phosphate de tributyle comme composé organophosphorique.

5. Procédé selon la revendication 1, 2, 3 ou 4, caractérisé en ce qu'on utilise du kérosène comme diluant inerte.

6. Procédé selon l'une quelconque des revendications précédentes, caractérisé en ce que la teneur en ions $Cl^-$ de la solution de départ est au moins égale à 105 g/l.

7. Procédé selon l'une quelconque des revendications précédentes, caractérisé en ce que la teneur en HCl de la solution de départ est au moins égale à 18 g/l.

8. Procédé selon la revendication 7, caractérisé en ce qu'on utilise une solution de départ contenant au moins un des éléments Zn, Cu, Mn, Co et Ni, le fer étant séparé des dits éléments.

9. Procédé selon la revendication 8, caractérisé en ce qu'on utilise une solution de départ contenant du molybdène hexavalent et/ou du vanadium pentavalent, le $Mo^{6+}$ et le $V^{5+}$ étant séparés ensemble avec le fer, des dits éléments.

10. Procédé selon l'une quelconque des revendications précédentes, caractérisé en ce qu'avant d'effectuer la ré-extraction du fer, on lave la phase organique avec une quantité d'eau suffisamment faible pour que l'eau de lavage obtenue contienne au moins 105 g/l d'ions $Cl^-$ et au moins 18 g/l de HCl.

11. Procédé selon l'une quelconque des revendications précédentes, caractérisé en ce qu'on utilise une solution de départ contenant au moins 10 g/l de fer trivalent.

**Patentansprüche**

1. Verfahren zur Trennung von dreiwertigem Eisen aus einer wäßrigen sauren Chloridlösung, bei dem die wäßrige Lösung in Berührung gebracht wird mit einer organischen Phase, die als Extraktionsmittel für das dreiwertige Eisen eine der folgenden Organophosphorverbindungen enthält:

Ester der Phosphorsäure mit der Formel

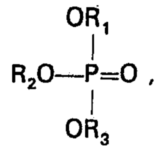

Ester der Phosphonsäure mit der Formel

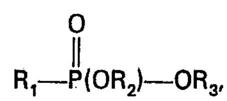

Ester der phosphonigen Säure mit der Formel

$R_1—P(OR_2)—OR_3$,

Ester der Phosphinsäure mit der Formel

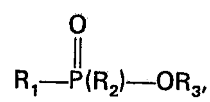

Ester der phosphinigen Säure mit der Formel

$R_1—P(R_2)—OR_3$,

worin

$R_1$, $R_2$ und $R_3$ substituierte oder nicht substituierte, gleiche oder verschiedene Kohlenwasserstoffgruppen sind und die organische Phase als Mittel zur Verhinderung der Emulsionsbildung einen aliphatischen Alkohol mit 8 bis 16 Kohlenstoffatom enthält, wobei man die mit Eisen beladene organische Phase von der wäßrigen Lösung trennt und das Eisen aus der organischen Phase reextrahiert, indem diese organische Phase mit Wasser oder angesäuertem Wasser in Berührung gebracht wird, so daß man eine wäßrige Eisenchloridlösung erhält, dadurch gekennzeichnet, daß man eine organische Phase verwendet, die mindestens 40 Volumenprozent aliphatischen Alkohol enthält.

2. Verfahren nach Anspruch 1, dadurch

gekennzeichnet, daß man eine organische Phase verwendet, die 40 bis 55% aliphatischen Alkohol, 10 bis 60% Organophosphorverbindung und 0 bis 50% inertes Verdünnungsmittel enthält.

3. Verfahren nach Anspruch 1 oder 2, dadurch gekennzeichnet, daß man Isodekanol als aliphatischen Alkohol verwendet.

4. Verfahren nach Anspruch 1, 2 oder 3, dadurch gekennzeichnet, daß man Tributylphosphat als Organophosphorverbindung verwendet.

5. Verfahren nach Anspruch 1, 2, 3 oder 4, dadurch gekennzeichnet, daß man Kerosin als inertes Verdünnungsmittel verwendet.

6. Verfahren nach einem der vorhergehenden Ansprüche, dadurch gekennzeichnet, daß der Gehalt an $Cl^-$-Ionen in der Ausgangslösung mindestens gleich 105 g/l ist.

7. Verfahren nach einem der vorhergehenden Ansprüche, dadurch gekennzeichnet, daß der Gehalt an H Cl in der Ausgangslösung mindestens 18 g/l beträgt.

8. Verfahren nach Anspruch 7, dadurch gekennzeichnet, daß man eine Ausgangslösung verwendet, die mindestens eines der Elemente Zn, Cu, Mn, Co and Ni enthält, und das Eisen von diesen Elementen getrennt wird.

9. Verfahren nach Anspruch 8, dadurch gekennzeichnet, daß man eine Ausgangslösung verwendet, die sechswertiges Molybdän und/oder fünfwertiges Vanadium enthält und das $Mo^{6+}$ und $V^{5+}$ zusammen mit dem Eisen von den genannten anderen Elementen getrennt werden.

10. Verfahren nach einem der vorhergehenden Ansprüche, dadurch gekennzeichnet, daß man vor der Ausführung der Reextraktion des Eisens die organische Phase mit einer so geringen Menge Wasser wäscht, daß das erhaltene Waschwasser mindestens 105 g/l $Cl^-$-Ionen und mindestens 18 g/l H Cl enthält.

11. Verfahren nach einem der vorhergehenden Ansprüche, dadurch gekennzeichnet, daß man eine Ausgangslösung verwendet, die mindestens 10 g/l dreiwertiges Eisen enthält.

## Claims

1. A process for separating trivalent iron from an aqueous chloride solution, in which the aqueous solution is contacted an organic phase containing

as an extraction agent for trivalent iron an organophosphoric compound chosen among

— the phosphoric acid esters with the formula

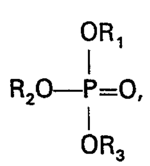

— the phosphonic acid esters with the formula

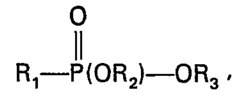

— the phosphonous acid esters with the formula

$R_1—P(OR_2)—OR_3$,

— the phosphinic acid esters with the formula

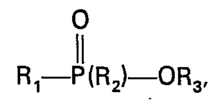 , and

— the phosphinous acid esters with the formula

$R_1—P(R_2)—OR_3$,

in which $R_1$, $R_2$ and $R_3$ represent the same or different, unsubstituted or substituted hydrocarbon groups, and

as an agent to prevent emulsion formation an aliphatic alcohol containing 8 to 16 carbon atoms, the iron-loaded organic phase is separated from the aqueous solution and the iron is re-extracted from the iron-loaded organic phase by contacting this organic phase with water or acidulated water so as to produce an aqueous iron chloride solution, characterised in that an organic phase is used containing at least 40 percent in volume of the aliphatic alcohol.

2. A process according to claim 1, characterized in that an organic phase is used containing 40 to 55 percent of the long chain aliphatic alcohol, 10 to 60 percent of the organophosphoric compound and 0 to 50 percent of an inert diluent.

3. A process according to claim 1 or 2, characterized in that isodecanol is used as the aliphatic alcohol.

4. A process according to claim 1, 2 or 3, characterized in that tributyl phosphate is used as the organophosphoric compound.

5. A process according to claim 1, 2, 3 or 4, characterized in that kerosene is used as the inert diluent.

6. A process according to any of the preceding claims, characterized in that the $Cl^-$ ions content of the starting solution is at least equal to 105 g/l.

7. A process according to any of the preceding claims, characterized in that the HCl content of the starting solution is at least equal to 18 g/l.

8. A process according to claim 7, characterized in that a starting solution is used containing at least one of the elements Zn, Cu,

Mn, Co and Ni, the iron being separated from said elements.

9. A process according to claim 8, characterized in that a starting solution is used containing hexavalent molybdenum and/or pentavalent vanadium, the $Mo^{6+}$ and the $V^{5+}$ being separated simultaneously with the iron from said elements.

10. A process according to any of the preceding claims, characterized in that before carrying out the re-extraction of the iron, the organic phase is washed with a quantity of water that is so small that the obtained washwater contains at least 105 g/l of $Cl^-$ ions and at least 18 g/l of HCl.

11. A process according to any of the preceding claims, characterized in that a starting solution is used containing at least 10 g/l of trivalent iron.